# EUROPÄISCHE PATENTSCHRIFT

(11) **EP 3 153 465 B1**
(45) Veröffentlichungstag und Bekanntmachung des Hinweises auf die Patenterteilung: **01.01.2020**
(21) Anmeldenummer: 15400044.2
(22) Anmeldetag: 05.10.2015
(51) Int. Cl.: C01B 3/38, B01J 8/06

(54) **REFORMER ZUR ERZEUGUNG VON SYNTHESEGAS**
REFORMER FOR PRODUCING SYNTHESIS GAS
REFORMATEUR DESTINE A LA FABRICATION D'UN GAZ DE SYNTHESE

(43) Veröffentlichungstag der Anmeldung: 12.04.2017
(73) Patentinhaber: L'Air Liquide Société Anonyme pour l'Etude et l'Exploitation des Procédés Georges Claude, 75007 Paris (FR)
(72) Erfinder: COSCIA, Antonio, D-65589 Hadamar (DE)
(74) Vertreter: Dropsch, Holger

(56) Entgegenhaltungen:
- EP-A1- 2 708 812
- EP-A2- 0 814 055
- WO-A1-2013/087194
- WO-A2-2010/149361
- DE-C1- 19 512 219
- US-A1- 2007 234 974

## Beschreibung

### Gebiet der Erfindung

Die Erfindung betrifft einen Dampfreformer, umfassend:
- einen Feuerraum, mit einem Boden, einer Decke und den Feuerraum abschließenden Seitenwänden,
- in mehreren Reihen angeordnete Katalysatorrohre, die den Boden und/oder die Decke des Feuerraums durchstoßen,
- in der Decke, dem Boden oder einer oder mehrerer Seitenwände des Feuerraums angeordnete Brenner zur Beheizung der Katalysatorrohre,
- unterhalb des Bodens oder oberhalb der Decke des Feuerraums verlaufende Zuleitungen jeweils für die Versorgung der Katalysatorrohre mit Eduktgas und der Brenner mit Luft und Brenngas,
- unterhalb des Bodens oder oberhalb der Decke des Feuerraums verlaufende Sammelleitungen für die Ableitung des Produktgases,
- unterhalb des Bodens oder oberhalb der Decke des Feuerraums verlaufende Kanäle zur Abfuhr der Brennerabgase aus dem Feuerraum, wobei die Kanäle ein keilförmiges, sich in Strömungsrichtung von ihrem Anfang zu ihrem Ende hin aufweitendes Längsprofil aufweisen und wobei die Decken der Kanäle jeweils vom Boden oder der Decke des Feuerraums gebildet werden, wobei die Kanäle längs und dabei zwischen den Reihen der Katalysatorrohre angeordnet sind und wobei die Decken der Kanäle Öffnungen für den Durchtritt der Abgase aufweisen.

Die Erfindung betrifft weiterhin ein Verfahren zur katalytischen Umwandlung von kohlenwasserstoffhaltigem Gas mit Dampf in ein Wasserstoff und Kohlenoxide enthaltendes Synthesegas.

### Stand der Technik

Dampfreformer zur Umwandlung von gasförmigen Kohlenwasserstoffen mit Dampf in hauptsächlich aus Kohlenmonoxid und Wasserstoff bestehendes Synthesegas sind bekannt. Das Dampfreformierungsverfahren wird grundsätzlich, z. B. in Ullmann's Encyclopedia of Industrial Chemistry, Sixth Ed., Vol. 15, Kapitel "Gas Production", Kap. 2.2 beschrieben. Auf die verschiedenen, für dieses Verfahren bewährten Typen von Rohrreaktoren wird dabei in Kap. 2.2.3 desselben Kapitels eingegangen. Dort werden Rohrreaktoren gezeigt, bei denen die Brenner im Dach oder in den Seitenwänden des Reformergehäuses installiert sind. Dazu ist zu ergänzen, dass auch Varianten mit im Boden des Gehäuses installierten Brennern, mit vertikal nach oben, in das Gehäuse hinein gerichteten Flammen, möglich sind, wie es z. B. in der Offenlegungschrift DE 2521683 A1 erwähnt ist.

Für die gleichmäßige Beheizung aller im Reformergehäuse befindlichen, mit einem Katalysatorfestbett gefüllten Reformerrohre ist die Ausgestaltung und die Anordnung der Kanäle zur Abfuhr der Brennerabgase aus dem Gehäuse sehr wichtig. Wie in Figur 6 des oben genannten Ullmann-Kapitels 2.2.3 gezeigt, besteht eine bewährte Auslegung der Reformer darin, die Brenner im Gehäusedach und die Abgassammelkanäle am Boden des Gehäuses anzuordnen. Dabei befinden sich die Brenner und die Kanäle, sich jeweils gegenüberliegend, zwischen den Reihen der Reformerrohre. Aus der Offenlegungsschrift DE 102011120938 A1 ist auch die Möglichkeit bekannt, die Abgassammeikanäle direkt unter dem Boden des Reformergehäuses anzuordnen. Dabei bildet der Boden des Reformergehäuses gleichzeitig die Abdeckung der Kanäle. Durch Öffnungen in der Abdeckung tritt das Brennerabgas vom Reformergehäuse in die Abgassammelkanäle über. Die Enden der Kanäle sind dabei über eine Sammelleitung mit einer Vorrichtung zum Absaugen des Abgases, wie einem Gebläse oder einem Kamin, verbunden.

Die internationale Anmeldeschrift WO 2013/087194 beschreibt einen transportablen Reformer mit ebenfalls einer Vielzahl von waagrecht, parallel zueinander unterhalb des Befeuerungsraums angeordneten Rauchgastunneln. Die Konstruktion dieses Reformers zielt darauf ab, die Transportfähigkeit des Reformers zu ermöglichen.

Die amerikanische Anmeldeschrift US 2007/0234974 A1 zeigt einen Reformer mit Rauchgaskanälen, deren Querschnitt vom Anfang zum Ende zunimmt, um die Gasgeschwindigkeit über die Länge des Kanals und damit die Absaugbedingungen über die Breite des Reformergehäuses konstant zu halten. In Fig. 7 dieser Schrift wird ein Rauchgaskanal mit einem keilförmigen Längsprofil gezeigt. Fig. 6 und Fig. 9 zeigen, wie die Öffnungen für den Gasdurchtritt zwischen dem Brennerraum des Reformers und dem jeweiligen Rauchgaskanal durch Abstände zwischen den Abdeckungssteinen des Rauchkanals gebildet werden.

Aufgrund des Strömungswiderstands, dem der Abgasstrom innerhalb der Kanäle jeweils unterliegt, führt zu einem Druckverlust vom Kanalanfang zum Kanalende. Ferner nimmt die abgesaugte Abgasmenge über die Länge der Kanäle kumulativ zu, da über zusätzliche Öffnungen in den Längsrichtungen der Kanäle zusätzliche Brennerabgase aus dem Reformergehäuse abgeführt werden. Hierdurch kommt es zu ungleichmäßigen, über die Kanallänge bzw. im Bodenbereich des Reformergehäuses verteilte Turbulenzen im Brennerabgas und damit zu einer ungleichmäßigen Beheizung der Reformerrohre.

### Beschreibung der Erfindung

Aufgabe der Erfindung ist es daher, einen Dampfreformer zur Verfügung zu stellen, bei dem die beschriebenen Nachteile bei der Absaugung der Brennerabgase vermieden werden. Diese Aufgabe wird durch einen Dampfreformer gemäß den Merkmalen des Anspruchs 1 gelöst:

### Erfindunasaemäßer Dampfreformer:

Dampfreformer, umfassend:
- einen Feuerraum, mit einem Boden, einer Decke und den Feuerraum abschließenden Seitenwänden,
- in mehreren Reihen angeordnete Katalysatorrohre, die den Boden und/oder die Decke des Feuerraums durchstoßen,
- in der Decke, dem Boden oder einer oder mehrerer Seitenwände des Feuerraums angeordnete Brenner zur Beheizung der Katalysatorrohre,
- unterhalb des Bodens oder oberhalb der Decke des Feuerraums verlaufende Zuleitungen jeweils für die Versorgung der Katalysatorrohre mit Eduktgas und der Brenner mit Luft und Brenngas,
- unterhalb des Bodens oder oberhalb der Decke des Feuerraums verlaufende Sammelleitungen für die Ableitung des Produktgases,
- unterhalb des Bodens oder oberhalb der Decke des Feuerraums verlaufende Kanäle zur Abfuhr der Brennerabgase aus dem Feuerraum, wobei die Kanäle ein keilförmiges, sich in Strömungsrichtung von ihrem Anfang zu ihrem Ende hin aufweitendes Längsprofil aufweisen und wobei die Decken bzw. Böden der Kanäle jeweils vom Boden oder der Decke des Feuerraums gebildet werden, wobei die Kanäle längs und dabei zwischen den Reihen der Katalysatorrohre angeordnet sind und wobei die Decken der Kanäle Öffnungen für den Durchtritt der Abgase aufweisen,
dadurch gekennzeichnet, dass
die Kanäle zur Abfuhr der Brennerabgase so ausgestaltet sind, dass die Strömungsgeschwindigkeit der Brennerabgase über die gesamte Länge der Kanäle, senkrecht zu den Katalysatorrohren gesehen, konstant ist und dass die Öffnungen in den Kanaldecken durch Gitterroste abgedeckt sind.

Auf diese Weise wird eine zusammenhängende Öffnung gebildet, die nicht durch geschlossene Stellen unterbrochen ist. Dies trägt positiv zu einer weiteren Vergleichmäßigung der Abgasströmung bei.

Indem erfindungsgemäß die Strömungsgeschwindigkeit über die Länge des Kanals konstant gehalten wird, bleibt ebenso das Verhältnis zwischen dem dynamischen und dem statischen Anteil des Drucks, gemäß dem Energieerhaltungssatz nach Bernoulli, konstant. Würde dagegen die Strömungsgeschwindigkeit vom Kanalanfang zum Kanalanfang hin zunehmen, so würde durch diese Zunahme des dynamischen Druckanteils der statische Druckanteil sinken und damit die statische Druckdifferenz zwischen den Innenräumen des Reformergehäuses und des Kanals steigen. Das wiederum würde tendenziell zu einer stärkeren Absaugung von Brennerabgas in diesem Bereich der Kanäle führen, der mit einer Verkleinerung der Durchtrittsöffnungen zwischen Gehäuse und Kanal begegnet werden müsste.

Weiterhin umfasst die Erfindung ein Verfahren zur katalytischen Umwandlung von kohlenwasserstoffhaltigem Gas mit Dampf in ein Wasserstoff und Kohlenoxide enthaltendes Synthesegas, umfassend die folgenden Verfahrensschritte:
- Bereitstellen eines kohlenwasserstoffhaltigen Gases und von Dampf,
- Erzeugen eines Eduktgases durch Vermischen des Gases und des Dampfs,
- Umwandeln des Eduktgases in ein Wasserstoff und Kohlenoxide umfassendes Synthesegas durch Umsetzen in einem Dampfreformer gemäß eines der Ansprüche 1 bis 6 unter Reformierungsbedingungen,
- Ausleiten des Synthesegases zur weiteren Behandlung außerhalb des Verfahrens.

Unter Reformierungsbedingungen werden die dem Fachmann an sich geläufigen Betriebsbedingungen der Reformeranlage verstanden, die einen technisch und ökonomisch sinnvollen Umsetzungsgrad der Einsatzstoffe zu Synthesegaskomponenten gewährleisten. Ein hierfür gewählter Satz von Betriebsbedingungen wird auch als Betriebspunkt bezeichnet.

### Bevorzugte Ausgestaltungen der Erfindung

Bevorzugt wird es weiterhin, wenn die Öffnungen in den Kanaldecken jeweils über die gesamte Kanallänge durchgehend sind und dabei ein sich in Strömungsrichtung verjüngendes Keilprofil aufweisen. Hierdurch vergrößert sich der Druckverlust über die Länge der Abgaskanäle beim Durchtritt der Brennerabgase vom Feuerraum in die Kanäle, so dass die Brennerabgase aus dem hinteren, der Absaugvorrichtung abgewandten Teil der Abgaskanäle leichter abgesaugt werden können.

Die vorgenannte bevorzugte Ausgestaltung ist vorteilhaft mit Rauchgaskanälen, die ein keilförmiges Längsprofil aufweisen, kombinierbar, da auf diese Weise die Änderung des Kanalquerschnitts und die Änderung der Größe der Öffnungen in den Kanaldecken zwischen Reformergehäuse und Kanal kontinuierlich und ohne Sprünge erfolgen, was der Vergleichmäßigung der Abgasströmung des Brennerabgases aus dem Reformergehäuse zu Gute kommt. Einseitige mechanische Belastungen der Abgaskanäle oder des Feuerraums, sowie die durch Turbulenzen verursachte ungleichmäßige Beheizung der Reformerrohre werden so reduziert.

Eine weitere bevorzugte Ausgestaltung der Erfindung ist dadurch gekennzeichnet, dass die Decken der Kanäle jeweils aus einer Vielzahl von über die gesamte Breite des Kanals verlaufende Platten bestehen, wobei Öffnungen in den Kanaldecken gebildet werden, indem die Platten in Abständen zueinander verlegt werden und wobei die Abstände der Platten zueinander in Strömungsrichtung des Abgases kontinuierlich kleiner werden.. Auf diese Weise wird die Breite der Kanalöffnung über die gesamte Kanallänge beibehalten. Hierdurch werden die Konstruktion und die Bauausführung der Kanäle vereinfacht. Die Größe der Durchtrittsöffnungen kann durch Austausch und/oder Verschieben der Platten auf einfache Weise verändert werden.

Da durch den Reibungswiderstand, den die Kanalwände auf die Gasströmung ausüben der statische Druck im Kanal in Strömungsrichtung abnimmt, wird so der Abzug des Brennerabgases aus dem Reformergehäuse über die Kanallänge vergleichmäßigt.

### Ausführungsbeispiel

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Anhand der Zeichnung soll eine beispielhafte Ausführung der Erfindung erläutert werden. Dabei zeigen:
- Fig. 1, C-C': eine Schnittzeichnung des Dampfreformers, von oben gesehen,
- Fig. 2, A-A',: eine Schnittzeichnung des Dampfreformers, von der Stirnseite gesehen,
- Fig. 3, B-B',: eine Schnittzeichnung des Dampfreformers, von der Längsseite gesehen,
- Fig. 4,: einen Abgaskanal mit keilförmiger Öffnung zum Reformergehäuse,
- Fig. 5,: einen Abgaskanal, dessen Öffnung zum Reformergehäuse mit Platten abgedeckt ist.

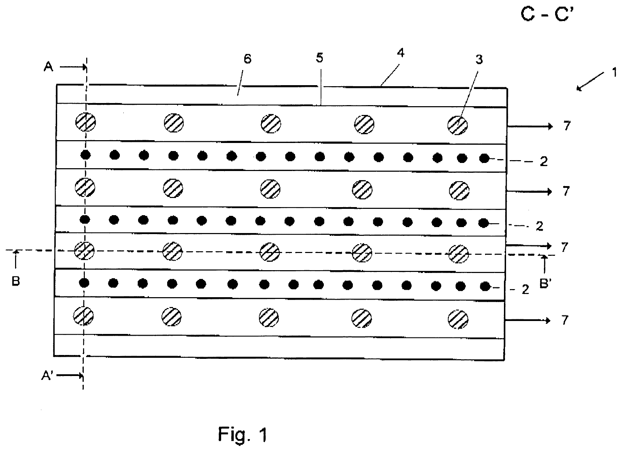

Fig. 1 zeigt einen Dampfreformer 1 mit in drei parallelen Reihen angeordneten Reformerrohren 2. Parallel zu den Reformerrohrreihen sind die Brenner 3 in vier Reihen im Dach des Dampfreformergehäuses 4 angeordnet. Den Brennreihen gegenüberliegend ist jeweils ein Kanal 5 zu Abfuhr des Brennerabgases unterhalb des Bodens 6 des Reformergehäuses 4 installiert. Die obere Begrenzung, d.h. die Abdeckung 11 des Kanals 5 bildet auch gleichzeitig einen Teil des Bodens 6 des Reformergehäuses 4. In Fig. 1 sind die Öffnungen für den Durchtritt der Brennerabgase in den Abdeckungen nicht dargestellt. Die Pfeile 7 zeigen die Strömungsrichtung des Brennerabgases an. Das Brennerabgas wird, wenn es am Ende des Kanals 5 austritt, von einem nicht bildlich dargestellten Abgassammelsystem übernommen, das eine Absaugvorrichtung umfasst.

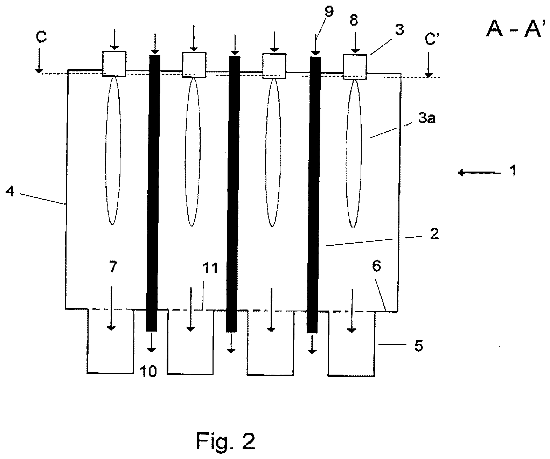

Fig. 2 zeigt den Dampfreformer 1 von der Stirnseite aus gesehen. Die Pfeile 8 stellen die Brenngaszufuhr zu den Brennern 3 dar. Die Flammen der Brenner 3a sind senkrecht in das Reformergehäuse 4 hineingerichtet. Die Pfeile 9 stellen die Eduktgaszufuhr zu den Reformerrohren 2 und die Pfeile 10 die Produktgasabfuhr aus den Reformerrohren 2 dar.

Durch den Reformerboden 6 tritt durch Durchlässe in der Kanalabdeckung 11, hier durch eine gestrichelte Linie symbolisiert, das Brennerabgas 7 in die Abgaskanäle 5 über.

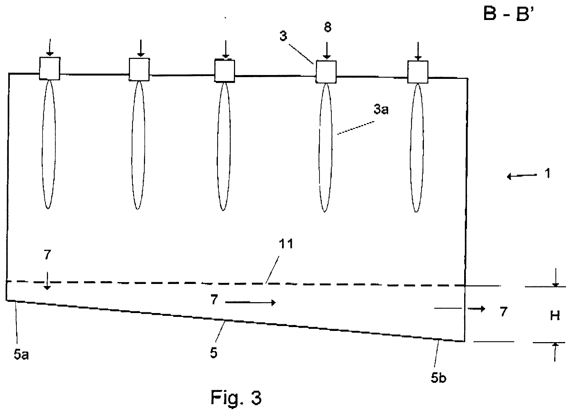

Fig. 3 zeigt den Dampfreformer 1 von der Längsseite aus gesehen. In dieser Figur ist skizziert, wie die Höhe H, und damit der Querschnitt, des Kanals 5 vom Kanalanfang 5a bis zum Kanalende 5b erfindungsgemäß zunimmt.

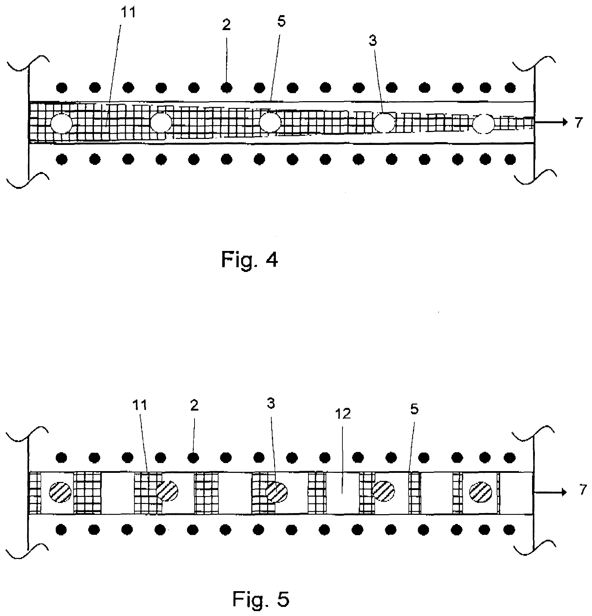

Fig. 4 entspricht einem Ausschnitt aus Fig. 1 und zeigt einen zwischen zwei Reihen von Reformerrohren 2 liegenden Brennerabgaskanal 6. Die Öffnung der Kanalabdeckung 11 ist dabei mit einem Gitterrost abgedeckt und die Form der Öffnung weist ein über die gesamte Kanallänge durchgehendes und sich dabei in Strömungsrichtung verjüngendes Keilprofil auf.

Fig. 5 entspricht ebenfalls einem Ausschnitt aus Fig. 1 und zeigt ebenfalls einen zwischen zwei Reihen von Reformerrohren 2 liegenden Brennerabgaskanal 6. In diesem Fall besteht die Decke des Kanals aus einer Vielzahl von über die gesamte Breite des Kanals verlaufenden Platten 12, die in Abständen zu einander auf der mit Gitterrost abgedeckten Kanaldecke verlegt sind, und zwar so, dass die Abstände zwischen den Platten, und damit die Öffnungen in der Kanaldecke, vom Kanalanfang zum Kanalende hin, also in Strömungsrichtung der Brennerabgase, kontinuierlich kleiner werden.

### Gewerbliche Anwendbarkeit

Die Erfindung dient dazu, die Gleichmäßigkeit der Beheizung eines Dampfreformers zu verbessern. Dadurch wird die Wirtschaftlichkeit des Reformerbetriebs erhöht. Die Erfindung ist daher gewerblich anwendbar.

### Bezugszeichenliste

- 1: Dampfreformer
- 2: Reformerrohr
- 3: Brenner
- 4: Reformergehäuse
- 5: Abgaskanal zur Abfuhr von Brennerabgas
- 5a: Kanalanfang des Abgaskanals
- 5b: Kanalende des Abgaskanals
- 6: Boden des Reformergehäuses
- 7: Brennerabgase
- 8: Brenngas
- 9: Eduktgas
- 10: Produktgas
- 11: Gasdurchlässige Abdeckung für Abgaskanal, Teil des Reformergehäusebodens
- 12: Platten zum örtlichen Abdecken von 11

## Patentansprüche

1. Dampfreformer (1), umfassend:
- einen Feuerraum (4), mit einem Boden (6), einer Decke und den Feuerraum (4) abschließenden Seitenwänden,
- in mehreren Reihen angeordnete Katalysatorrohre (2), die den Boden (6) und/oder die Decke des Feuerraums durchstoßen,
- in der Decke, dem Boden oder einer oder mehrerer Seitenwände des Feuerraums angeordnete Brenner (3) zur Beheizung der Katalysatorrohre (2),
- unterhalb des Bodens (6) oder oberhalb der Decke des Feuerraums (4) verlaufende Zuleitungen jeweils für die Versorgung der Katalysatorrohre mit Eduktgas (9) und der Brenner (3) mit Luft und Brenngas,
- unterhalb des Bodens (6) oder oberhalb der Decke des Feuerraums (4) verlaufende Sammelleitungen für die Ableitung des Produktgases (10),
- unterhalb des Bodens (6) oder oberhalb der Decke des Feuerraums (4) verlaufende Kanäle zur Abfuhr der Brennerabgase (7) aus dem Feuerraum (4), wobei die Kanäle ein keilförmiges, sich in Strömungsrichtung von ihrem Anfang (5a) zu ihrem Ende (5b) hin aufweitendes Längsprofil aufweisen und wobei die Decken bzw. Böden der Kanäle jeweils vom Boden oder der Decke des Feuerraums (4) gebildet werden, wobei die Kanäle längs und dabei zwischen den Reihen der Katalysatorrohre (2) angeordnet sind und wobei die Decken der Kanäle Öffnungen für den Durchtritt der Abgase (7) aufweisen,
**dadurch gekennzeichnet, dass**
die Kanäle zur Abfuhr der Brennerabgase so ausgestaltet sind, dass die Strömungsgeschwindigkeit der Brennerabgase über die gesamte Länge der Kanäle, senkrecht zu den Katalysatorrohren gesehen, konstant ist und dass die Öffnungen in den Kanaldecken durch Gitterroste abgedeckt sind.

2. Dampfreformer (1) gemäß Anspruch 1, **dadurch gekennzeichnet, dass** die Öffnungen (11) in den Kanaldecken jeweils über die gesamte Kanallänge durchgehend sind und dabei ein sich in Strömungsrichtung verjüngendes Keilprofil aufweisen.

3. Dampfreformer (1), gemäß eines der vorigen Ansprüche, **dadurch gekennzeichnet, dass** die Decken der Kanäle jeweils aus einer Vielzahl von über die gesamte Breite des Kanals verlaufende Platten (12) bestehen, wobei Öffnungen in den Kanaldecken gebildet werden, indem die Platten (12) in Abständen zu einander verlegt werden und wobei die Öffnungen in den Kanaldecken in Strömungsrichtung kontinuierlich kleiner werden.

4. Verfahren zur katalytischen Umwandlung von kohlenwasserstoffhaltigem Gas mit Dampf in ein Wasserstoff und Kohlenoxide enthaltendes Synthesegas, umfassend die folgenden Verfahrensschritte:
- Bereitstellen eines kohlenwasserstoffhaltigen Gases und von Dampf,
- Erzeugen eines Eduktgases durch Vermischen des Gases und des Dampfs,
- Umwandeln des Eduktgases in ein Wasserstoff und Kohlenoxide umfassendes Synthesegas durch Umsetzen in einem Dampfreformer gemäß eines der Ansprüche 1 bis 3 unter Reformierungsbedingungen,
- Ausleiten des Synthesegases zur weiteren Behandlung außerhalb des Verfahrens,

## Claims

1. Steam reformer (1) comprising:
- a firebox (4) with a bottom (6), a ceiling and side walls terminating the firebox (4),
- catalyst tubes (2) which are arranged in several rows and penetrate the bottom (6) and/or the ceiling of the firebox,
- burners (3) arranged in the ceiling, the bottom or one or more side walls of the firebox for heating the catalyst tubes (2),
- feed ducts extending below the bottom (6) or above the ceiling of the firebox (4) in each case for supplying the catalyst tubes with educt gas (9) and for supplying the burners (3) with air and fuel gas,
- collecting ducts extending below the bottom (6) or above the ceiling of the firebox (4) for discharging the product gas (10),
- channels extending below the bottom (6) or above the ceiling of the firebox (4) for removal of the burner waste gases (7) from the firebox (4), wherein the channels have a wedge-shaped longitudinal profile which widens in the flow direction from the start (5a) to the end (5b) thereof, wherein the ceilings or bottoms of the channels are in each case formed by the bottom or the ceiling of the firebox (4), wherein the channels are arranged along and between the rows of catalyst tubes (2), and wherein the ceilings of the channels have openings for the passage of the waste gases (7),
**characterised in that**
the channels for removal of the burner waste gases are configured so that the flow velocity of the burner waste gases is constant over the entire length of the channels, viewed perpendicular to the catalyst tubes, and so that the openings in the channel ceilings are covered by gratings.

2. Steam reformer (1) according to claim 1, **characterised in that** the openings (11) in the channel ceilings are in each case continuous over the entire channel length and in this case have a wedge profile tapering in the flow direction.

3. Steam reformer (1) according to any of the preceding claims, **characterised in that** the ceilings of the channels in each case consist of a plurality of plates (12) extending over the entire width of the channel, wherein openings are formed in the channel ceilings by the plates (12) being placed at distances from one another, and wherein the openings in the channel ceilings continuously become smaller in the flow direction.

4. Method for the catalytic conversion of hydrocarbonaceous gas with steam into a synthesis gas containing hydrogen and carbon oxides, comprising the following method steps:
- providing a hydrocarbonaceous gas and steam,
- producing an educt gas by mixing the gas and the steam,
- converting the educt gas into a synthesis gas comprising hydrogen and carbon oxides by reaction in a steam reformer according to any of claims 1 to 3 under reforming conditions,
- discharging the synthesis gas for the further treatment outside the method.

## Revendications

1. Reformeur à la vapeur (1) comprenant :
- une enceinte de chauffe (4) avec un plancher (6), un plafond et des parois latérales délimitant l'enceinte de chauffe (4),
- des tubes de catalyseur (2) agencés en plusieurs rangées, qui passent à travers le plancher (6) et/ou le plafond de l'enceinte de chauffe,
- des brûleurs (3) agencés dans le plafond, le plancher ou une ou plusieurs parois latérales de l'enceinte de chauffe pour chauffer les tubes de catalyseur (2),
- des canalisations d'amenée s'étendant sous le plancher (6) ou au-dessus du plafond de l'enceinte de chauffe (4) pour l'alimentation des tubes de catalyseur en gaz éduit (9) et du brûleur (3) en air et en gaz combustible,
- des canalisations de collecte s'étendant sous le plancher (6) ou au-dessus du plafond de l'enceinte de chauffe (4), pour l'évacuation du gaz produit (10),
- des canaux s'étendant sous le plancher (6) ou au-dessus du plafond de l'enceinte de chauffe (4), pour évacuer les gaz d'échappement de brûleur (7) hors de l'enceinte de chauffe (4), dans lequel les canaux présentent un profil longitudinal cunéiforme qui s'élargît dans la direction d'écoulement de son début (5a) à son extrémité (5b), et dans lequel les plafonds ou les planchers des canaux sont formés chacun par le plancher ou le plafond de l'enceinte de chauffe (4), dans lequel les canaux sont agencés longitudinalement et entre les rangées de tubes de catalyseur (2), et dans lequel les plafonds des canaux présentent des ouvertures pour le passage des gaz d'échappement (7),
**caractérisé en ce que**
les canaux pour évacuer les gaz d'échappement de brûleur sont conçus pour que la vitesse d'écoulement des gaz d'échappement de brûleur soit constante sur toute la longueur des canaux, et prévus perpendiculaires aux tubes de catalyseur, et **en ce que** les ouvertures dans les plafonds de canal soient recouvertes de caillebotis.

2. Reformeur à la vapeur (1) selon la revendication 1, **caractérisé en ce que** les ouvertures (11) situées dans les plafonds de canal sont continues sur toute la longueur de canal, et présentent ainsi un profil cunéiforme qui est effilé dans la direction d'écoulement.

3. Reformeur à la vapeur (1) selon l'une des revendications précédentes, **caractérisé en ce que** les plafonds des canaux sont constitués d'une pluralité de plaques (12) s'étendant sur toute la largeur des canaux, dans lequel des ouvertures sont formées dans les plafonds de canal, dans lesquelles les plaques (12) sont disposés à distance les unes des autres, et dans lequel les ouvertures dans les plafonds de canal diminuent de manière continue dans la direction d'écoulement.

4. Procédé de conversion catalytique d'un gaz hydrocarboné avec de la vapeur en un gaz de synthèse contenant de l'hydrogène et des oxydes de carbone, comprenant les étapes de procédé consistant à :
- fournir un gaz hydrocarboné et de la vapeur,
- produire un gaz éduit en mélangeant le gaz et la vapeur,
- convertir le gaz éduit en un gaz de synthèse comprenant de l'hydrogène et des oxydes de carbone par réaction dans un reformeur à la vapeur selon l'une des revendications 1 à 3 dans des conditions de reformage,
- évacuer le gaz de synthèse pour un traitement ultérieur en dehors du procédé.
